# EUROPÄISCHE PATENTANMELDUNG

(11) **EP 2 189 779 A2**
(43) Veröffentlichungstag der Anmeldung: **26.05.2010**
(21) Anmeldenummer: 09176773.1
(22) Anmeldetag: 23.11.2009
(51) Int. Cl.: G01N 1/02, G01N 15/06, G01N 35/00, G01N 1/22, G01N 33/52, G01N 1/10

(54) **Messelement, Vorrichtung zur Herstellung von mindestens eines Messelements; Lagerungsvorrichtung und Kodiervorrichtung für mindestens ein Messelement**

(30) Priorität: 24.11.2008 DE 102008059168; 14.08.2009 DE 102009028553
(71) Anmelder: Comde Computer Messtechnik Design und Entwicklungs GmbH, 14532 Stahnsdorf (DE)
(72) Erfinder: Derenda, Norbert, 12207, Berlin (DE)
(74) Vertreter: Gross, Felix

(57) **Zusammenfassung**

Die Erfindung betrifft ein Messelement (10) mit mindestens einer für ein Fluid permeablen Messzone (2) und mit mindestens einer Kodierung (1) auf und/oder in einem Material des Messelements (10), insbesondere zur Individualisierung des Messelementes (10), wobei die Kodierung (1) durch Abtragen des Materials, durch Auftragen auf das Material, durch einen Ausschnitt des Materials, durch eine Strukturierung des Materials, durch eine Verdünnung des Materials und/oder durch Prägen des Materials gebildet ist. Ferner betrifft die Erfindung eine Lagerungsvorrichtung für mindestens ein Messelement (10) und die Kodiervorrichtung für mindestens ein Messelement (10).

## Beschreibung

Die Erfindung betrifft ein Messelement nach Anspruch 1, eine Vorrichtung zur Herstellung mindestens eines Messelements nach Anspruch 7, eine Lagerungsvorrichtung nach Anspruch 9 und eine Kodiervorrichtung für mindestens ein Messelement nach Anspruch 15.

In vielen Fällen stellt sich die Aufgabe, Messungen an Fluiden (d.h. Gas, Flüssigkeit, fluide Gemische überkritische Phasen etc.) vorzunehmen, in dem Partikel oder andere Substanzen (z.B. Bakterien, Viren, Aerosole, Tröpfchen etc.) enthalten sind.

Ein Beispiel ist die Durchführung der Überwachung von Stäuben in der Umwelt, bei der an vorbestimmten Punkten Staubsammelgeräte, z. B. Kleinfiltergeräte in Verbindung mit automatischen Filterwechslern nach CEN 12341, vorgesehen sind. Dabei werden einzelne Filter nacheinander über einem Zeitraum von 24 h mit Außenluft bei einem konstant gehaltenen Luftdurchsatz belegt. Die Auswertung der Messelemente von verschiedenen Messstellen erfolgt dann in einem entsprechend ausgerüsteten Labor.

Der vorliegenden Erfindung liegt die Aufgabe zugrunde, effiziente Mittel für diese Messaufgabe bereit zu stellen.

Diese Aufgabe wird erfindungsgemäß durch ein Messelement mit den Merkmalen des Anspruchs 1 gelöst.

Dabei weist das Messelement mindestens eine für ein Fluid permeablen Messzone und mindestens eine Kodierung auf, die in und/oder in einem Material des Messelements angeordnet ist. Die Kodierung dient insbesondere der Individualisierung des Messelementes, kann aber z. B. noch weitere Informationen über Messbedingungen oder Zeiten enthalten. Die Kodierung wird durch Abtragen des Materials, durch Auftragen auf das Material, durch einen Ausschnitt des Materials, durch eine Strukturierung des Materials, durch eine Verdünnung des Materials und/oder durch Prägen des Materials gebildet. Damit ist sichergestellt, dass der Einfluss durch Fremdmaterialien gering ist, die eine Auswertung der Messungen verfälschen können.

Vorteilhaft ist es, wenn die mindestens eine Kodierung außerhalb der Messzone angeordnet ist. Damit wird die Messzone homogen aus einem Material einer Art gebildet, so dass eine besonders gleichmäßige Messung möglich ist.

Ferner ist es vorteilhaft, wenn das Messelement als Filterelement für die Filterung von Partikeln aus Gasen oder Gasgemischen ausgebildet ist. Diese Art von Messelementen können vorteilhafterweise für Staubmessungen in der Außenluft eingesetzt werden. Für Langzeitmessungen ist die Individualisierung der Messelemente von besonderer Bedeutung, um eine sichere Zuordnung der Messergebnisse zu ermöglichen.

Aber auch für andere Messaufgaben kann das Messelement ausgebildet sein, z. B. indem mindestens eine Messzone einen Indikator für eine chemische Substanz aufweist. Solche Systeme können z. B. zur Überwachung von Aerosolen in Lüftungen verwendet werden, wenn die Aerosole eine chemische Reaktion eingehen können. Die Erfindung ist somit nicht nur auf Festkörperpartikel beschränkt.

Vorteilhafterweise weisen die Messelemente eine runde Außenkontur, eine trapezförmige Außenkontur oder eine polygonale Außenkontur auf, wobei die mindestens eine Kodierung in einem Randbereich der Außenkontur angeordnet ist.

Eine effiziente Identifizierung und Informationsübermittlung kann erfolgen, wenn die mindestens eine Kodierung in Form eines binären Codes oder Winkelcodes ausgebildet ist. Ein Winkelcode kodiert die Information beginnend von einer Startmarke in Abhängigkeit der von dieser Startmarke gemessenen Winkel.

Auch ist es vorteilhaft, wenn die mindestens eine Kodierung mindestens eine Ausnehmung an der Außenkontur aufweist. Ausnehmungen sind optisch oder auch mechanisch leicht zu detektieren, so dass die Information leicht ausgewertet werden kann. Im Übrigen können die Ausnehmungen auch leicht in das Material eingebracht werden.

Um ein aufwändiges Umsortieren der Messelemente zu vermeiden und die Handhabung zu vereinfachen ist es vorteilhaft, wenn die mindestens eine Kodierung ein Mittel zur Identifikation der räumlichen Lage des mindestens einen Messelements in einer Lagerungsvorrichtung aufweist.

Die Aufgabe wird auch durch eine Vorrichtung zur Herstellung mindestens eines Messelementes gemäß Anspruch 7 gelöst.

Dabei dient eine Trägervorrichtung mit mindestens einem Haltemittel der Aufnahme und Fixierung eines Rohlings für mindestens ein Messelement. Gerade für Messelemente aus dünnen oder biegsamen Material ist eine sichere Halterung durch die Haltemittel sinnvoll, um die Messmittel z.B. mit einer Kodierung versehen zu können. Die Haltemittel können dabei z.B. eine Lasche und / oder einen Schlitz aufweisen, die in die Trägervorrichtung eingebracht sind. Diese Haltemittel sind effizient herstellbar und können die Rohlinge für die Messelemente gut fixieren. Eine weitere Fixierung ist vorteilhafterweise möglich, indem die Trägervorrichtung flexibel ausgebildet ist und ein Teil der Trägervorrichtung so gefaltet werden kann, dass er den Rohling für das mindestens eine Messelement als zusätzliche Fixierung bedeckt.

Die Aufgabe wird auch durch eine Lagerungsvorrichtung mit den Merkmalen des Anspruchs 9 gelöst. Für eine schnelle und effiziente Handhabung weist die Lagerungsvorrichtung eine drehbare Halterung für das mindestens eine Messelement auf.

Um möglichst viele Messelemente aufnehmen zu können, sind mindestens zwei Halterungen die Messelemente vorgesehen, wobei die mindestens zwei Halterungen in parallelen Ebenen angeordnet sind. Mit einer solchen Anordnungen können z. B. Stapel gebildet werden. Auch ist es vorteilhaft, wenn mindestens eine der Halterungen separat von den anderen Halterungen von der Lagerungsvorrichtung entnehmbar ist.

In einer weiteren vorteilhaften Ausgestaltung weist die Lagerungsvorrichtung eine Kopplung mit einer Handhabungsvorrichtung für das mindestens eine Messelement auf. Auch ist eine Kopplung mit einer Steuerungsvorrichtung zur Zuordnung der räumlichen Lage des mindestens einen Messelements in der Lagerungsvorrichtung vorteilhaft. Unter räumlicher Lage wird dabei insbesondere die Winkellage des mindestens einen Messelements oder der Lage des mindestens einen Messelements in einer der Ebenen verstanden.

Zur Verminderung statischer Aufladungen ist es sinnvoll, das die Halterungen für das mindestens eine Messelement eine leitfähige Auflagefläche. insbesondere aus einem nichtoxidierbaren Material (z. B. Gold) aufweisen. Auch ist es vorteilhaft, wenn die Halterung und/oder die leitfähige Auflagefläche elektrisch leitend mit einer Masse verbunden ist.

Da die Messelemente bevorzugt automatisch gehandhabt werden, ist es wichtig, dass diese in definierter Lage in der Lagerungsvorrichtung angeordnet sind. Deswegen ist es vorteilhaft, wenn mindestens ein Positioniermittel und/oder Fixiermittel für das mindestens eine Messelement in der Halterung vorgesehen ist.

Um Referenzwerte für die eigentlichen Messungen an den Messelementen zu erhalten, sind vorteilhafterweise Referenzmessmittel vorgesehen. Daher ist es vorteilhaft, wenn die Lagerungsvorrichtung mit einem Referenzmittel enthaltend mindestens ein Referenzmesselement gekoppelt ist. Auch kann ein integriertes System durch die Kopplung mit einem Messmittel, insbesondere eine Waage, für das mindestens eine Messelement geschaffen werden. Diese Ausführungsformen können einzeln oder zusammen mit anderen Ausführungsformen der Lagerungsvorrichtung verwendet werden.

Vorteilhafterweise weist das Messmittel ein Lesemittel für die mindestens eine Kodierung des mindestens einen Messelementes auf.

Um Umwelteinflüsse auf die Messungen auszuschließen oder den Effekt zu minimieren, ist es vorteilhaft, wenn mindestens ein Teil der Lagerungsvorrichtung, des Handhabungsmittels, der Steuerungsvorrichtung, des Referenzmittels und/oder des Messmittels klimatisiert ist. Diese Ausführungsform kann einzeln oder zusammen mit anderen Ausführungsformen der Lagerungsvorrichtung verwendet werden.

Auch ist es vorteilhaft, wenn die Lagerungsvorrichtung selbst und / oder mindestens eine Halterung mit einem Transponder, insbesondere einer RFID, gekoppelt ist. Damit können die einzelnen Teile sicher identifiziert werden, was z.B. dann sinnvoll ist, wenn mehrere Teile in einem Labor bearbeitet werden. Diese Ausführungsform kann einzeln oder zusammen mit anderen Ausführungsformen der Lagerungsvorrichtung verwendet werden.

Die Aufgabe wird auch durch eine Kodiervorrichtung mit den Merkmalen des Anspruchs 15 gelöst. Dabei ist es vorteilhaft, wenn die Kodiervorrichtung ein Mittel zur Einbringung von Ausnehmungen in die Außenkontur des Messelementes aufweist.

Die Erfindung wird nachfolgend unter Bezugnahme auf die Figuren der Zeichnungen an mehreren Ausführungsbeispielen näher erläutert. Es zeigen:
- Fig. 1A bis 1D: Draufsichten auf unterschiedliche Ausführungsformen für Messelemente;
- Fig. 2: eine perspektivische Ansicht einer Lagerungsvorrichtung für Messelemente;
- Fig. 3: eine Draufsicht auf eine Ebene einer Lagerungsvorrichtung;
- Fig. 4: eine perspektivische Ansicht eines Referenzmittels;
- Fig. 5: eine schematische Darstellung diverser Komponenten;
- Fig. 6: eine perspektivische Auschnittsdarstellung einer Ausführungsform einer Vorrichtung zur Herstellung mindestens eines Messelementes;
- Fig. 7: eine Draufsicht auf eine Trägervorrichtung einer Ausführungsform einer Vorrichtung zur Herstellung mindestens eines Messelementes.

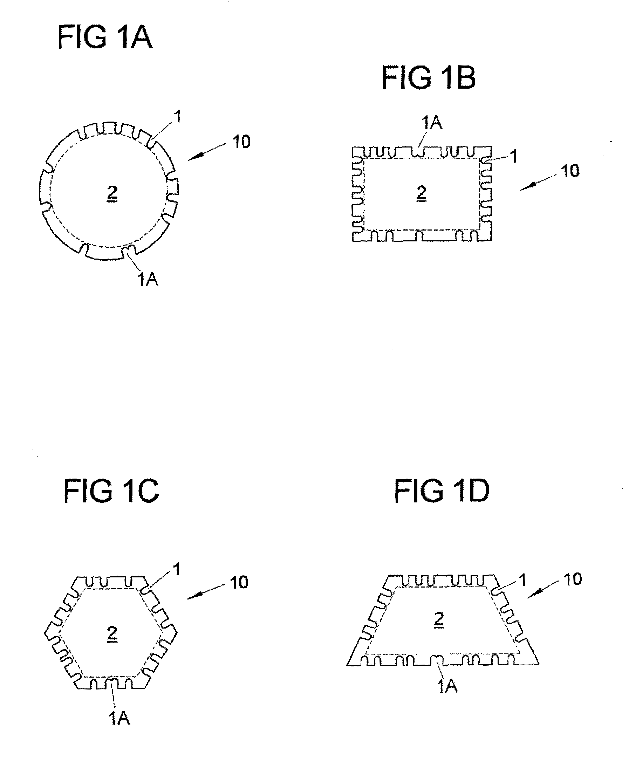

In Fig. 1A bis 1D werden unterschiedliche Ausführungsformen für Messelemente 10 dargestellt, die ein Material aufweisen, das für ein Fluid permeabel ist. Solche Messelemente 10 können z. B. aus einem papierähnlichen Material, aus Kunststoff, aus einer Faserscheibe oder einem textilem Material bestehen. Auch können die Messelemente 10 aus mehr als einem Material bestehen oder Zonen mit unterschiedlichem Materialien aufweisen, wobei die Zonen an unterschiedliche Funktionen angepasst sind. Das Messelement 10 ist hier in Form einer dünnen Scheibe, insbesondere Faserscheibe ausgebildet.

Solche Messelement 10 werden zur Messung in eine hier nicht dargestellte Vorrichtung eingelegt und von einem Fluid durchströmt. Das Fluid, z. B. Umgebungsluft, durchströmt dabei eine Messzone 2. Partikel, die in der Umgebungsluft vorhanden sind, lagern sich auf der Messzone 2, so dass sich nach einiger Zeit ein Belag aus Partikeln auf der Messzone 2 gebildet hat. Diese aus der Umgebungsluft herausgefilterten Partikel können anschließend analysiert werden, was später noch beschrieben wir.

In Fig. 1A ist ein Messelement 10 mit einer runden Außenkontur dargestellt. Der Durchmesser eines Messelementes 10 für die Staubmessung beträgt ca. 4,7 bis 5 cm, wobei für andere Messzwecke selbstverständlich andere Abmessungen verwendet werden können.

Die Messzone 2 ist ebenfalls rund und in der Mitte des Messelementes 10 angeordnet. In der Randzone des Messelementes 10, in Fig. 1A gestrichelt dargestellt, ist eine Kodierung 1, 1A angeordnet; d. h., die Kodierung 1, 1A ist in der dargestellten Ausführungsform außerhalb der Messzone 2 angeordnet.

Die Kodierung 1, 1A wird durch eine Folge von Ausnehmungen gebildet, die in der Randzone angeordnet sind. Im vorliegenden Fall sind die Ausnehmungen ca. 2 mm in radialer Richtung in die Randzone eingebracht. Die Form der Ausnehmungen ist grundsätzlich beliebig, so lange sich aus der Anordnung der Ausnehmungen (oder in anderen Fällen der Anordnung anderer Muster) eine Information kodieren lässt.

Die Kodierung 1, 1A dient dazu, ein Messelement 10 zu individualisieren, so dass Messergebnisse, die an dem Messelement 10 gewonnen werden, dem Messelement 10 eindeutig zugeordnet werden können.

Die Kodierung 1, 1A ist hier in Form eine binären Codes, nicht unähnlich dem bekannten Barcode, ausgebildet. In alternativen Ausgestaltungen können auch andere Kodierungsformen verwendet werden. Die Abfolge der Ausnehmungen und der nicht ausgenommen Bereiche der Randzone stellt die Information der Kodierung 1, 1A dar. Eine doppelte Ausnehmung 1A ermöglicht eine Identifizierung der räumlichen Orientierung des Messelementes 10, z.B. welche Seite oben oder unten liegt. Die doppelte Ausnehmung 1A kann als Startmarke dienen.

Die Anordnung der Kodierung 1, 1A in der Randzone des Messelementes 10 ermöglicht es, dass die Messzone 2 frei von jeglicher Kodierung ist, d.h. die Messzone 2 besteht ausschließlich aus dem permeablen Material, dessen definierten Permeationseigenschaft durch die Kodierung 1, 1A nicht gestört werden. In alternativen Ausführungsformen kann die Kodierung 1, 1A aber auch ganz oder teilweise in der Messzone 2 angeordnet sein.

In alternativen Ausführungsformen ist das Messelement 10 als Rechteck (Fig. 1B), als Polygon (Fig. 1C) oder als Trapez (Fig. 1D) ausgebildet. In allen diesen Ausführungsformen gilt das Gleiche, wie zu Fig. 1A ausgeführt, nämlich dass die Randzone die Kodierung 1, 1A in Form von Ausnehmungen aufweist. Der Fachmann erkennt, dass grundsätzlich auch andere Geometrien, insbesondere auch unregelmäßige Außenkonturen der Messelemente 10 möglich sind.

Alternative Ausführungsformen der Messelemente 10 weisen Kodierungen 1, 1A auf, die in anderer Weise in das Material eingebracht sind. In einer ersten Ausführungsform ist wird die Kodierung 1, 1A durch Abtragen von Material bewirkt. Die Ausnehmungen stellen als Ausschnitt von Material auch eine Form der Abtragung dar, wobei es möglich ist, bestimmte Zonen des Messelementes 10 dünner als andere Zonen auszubilden. Die durch die Abtragung hervorgerufene unterschiedliche Dicke (oder z. B. auch Lichtdurchlässigkeit) des Materials würde es erlauben eine kodierte Information auf oder an dem Messelement 10 anzubringen.

In einer zweiten Ausführungsform ist es möglich, die Kodierung durch einen Materialauftrag, z.B. durch Farbe oder andere Material, herzustellen. Auch kann gezielt die Dicke des Messelementes 10 in einigen Bereichen erhöht werden, um eine Kodierung 1, 1A herzustellen. In jedem Fall ist es grundsätzlich auch möglich die Kodierungen 1, 1A ganz oder teilweise in der Messzone 2 anzuordnen, wenn der Messzweck dadurch nicht gestört wird.

Auch ist es möglich das Material in gezielter Weise zu strukturieren, indem es z. B. geprägt wird.

Die genannten Arten der Kodierung sind auch in Kombination miteinander anwendbar.

Die hier beschriebenen Messelemente 10 werden z. B. bei der Partikel- oder Staubmessung von Umgebungsluft eingesetzt. Grundsätzlich lassen solche Messelemente 10 auch in Zusammenhang mit anderen Messvorrichtungen verwenden, die Gase, Gasgemische, Flüssigkeiten, Flüssigkeitsgemische oder mehrphasige Fluide untersuchen. Die Messzone 2 kann z. B. Indikatoren aufweisen, um bestimmte chemische Reaktionen anzuzeigen. Auch können biologische Keime aus einem fluiden Medium herausgefiltert werden. Ferner kann ein Messelement 10 dazu dienen, radioaktive Partikel herauszufiltern, die dann einer Messung zugeführt werden.

Typischerweise, aber nicht zwingend, werden solche Messelemente 10 in Messvorrichtungen eingesetzt, in denen diese längere Zeit gelagert werden, um dann für eine bestimmte Zeit dem Fluid ausgesetzt zu werden. So sind z.B. mehrtägige Luftstaubmessungen möglich, bei die Messelemente 10 für eine vorbestimmte Zeit der Umgebungsluft ausgesetzt werden.

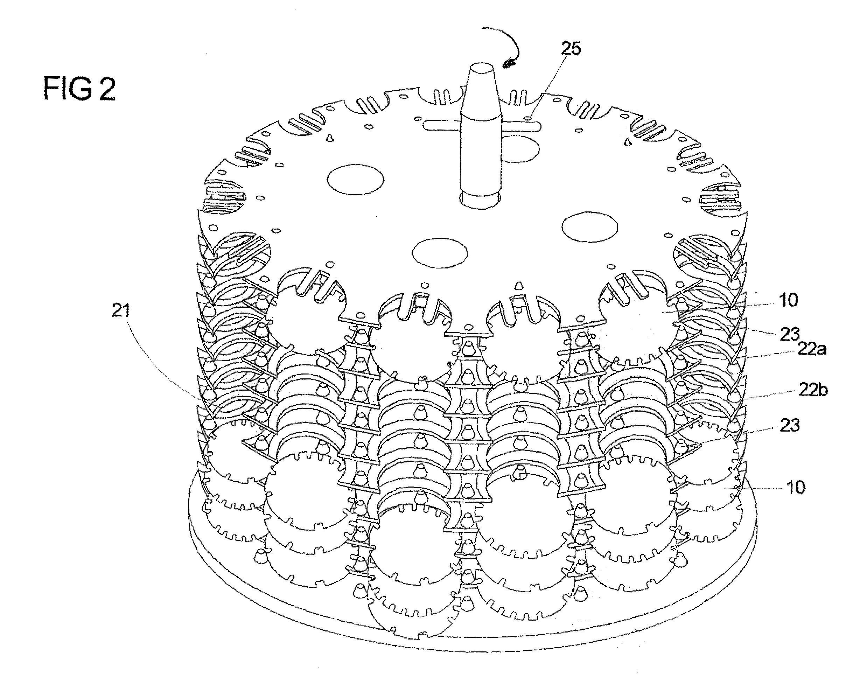

Eine weitere Ausführungsform der vorliegenden Erfindung weist eine Lagerungsvorrichtung 20 auf, in der sechzehn Messelemente 10 angeordnet werden können. In Fig. 2 ist ein Beispiel dafür dargestellt. Die Lagerungsvorrichtung 20 weist hier zehn Ebenen 22A, 22B auf, wobei jede Ebene sechszehn Halterungen 21 aufweist. Insgesamt kann die gesamte Lagerungsvorrichtung 20 somit 160 Messelemente 10 aufnehmen kann. Aus Gründen der Übersicht sind die Lagerungsvorrichtung 20 hier nicht voll bestückt mit Messelementen 10 dargestellt.

Diese Lagerungsvorrichtung 20 kann z. B. in einem Labor mit Messelementen 10 bestückt werden und dann zu einer Messvorrichtung im Freiraum gebracht werden.

Dann können sämtliche (oder eine vorbestimmte Anzahl) Messelemente 10 für eine Messung verwendet wurden. Die Messelemente 10 können einzeln der Lagerungsvorrichtung 20 entnommen werden und dem Fluid, z.B. der Umgebungsluft, ausgesetzt werden. Nach Abschluss der Messung kann die Lagerungsvorrichtung 20 gegen eine andere ausgetauscht werden. An der oberen Seite der Lagerungsvorrichtung 20 ist ein Griffelement 25 angeordnet, um die gesamte Lagerungsvorrichtung 20 leichter handhaben zu können.

Die Lagerungsvorrichtung 20 ist in der dargestellten Ausführungsform rotierbar angeordnet, was in Fig. 2 durch einen Pfeil angedeutet ist. Damit wird eine Art Revolvervorrichtung gebildet, der die einzelnen Messelemente 10 einfach zu entnehmen sind. Grundsätzlich können auch einzelne Ebenen 22A, 22B rotieren oder einige Ebenen 22A, 22B zusammen.
Die einzelnen Ebenen 22A, 22B können einzelnen auseinander genommen werden, so dass die Aufnahmekapazität der Lagerungsvorrichtung angepasst werden können.

Um die Messelemente 10 in einfacher Weise in die Lagerungsvorrichtung 20 einlegen zu können, weist jede Ebene 22A, 22B Halterungen 21 für die Messelemente 10 auf. Die Halterungen 21 weisen eine Ausnehmung auf. Grundsätzlich ist es möglich, dass Abstützungselemente für die Messelemente 10 in diese Ausnehmung ragen können.

Der Rand der Ausnehmung bildet in der dargestellten Form die Auflagefläche für die Messelemente 10. Der Rand der Ausnehmung ist in dem dargestellten Beispiel als ein leitfähiges Auflageelement 23 ausgebildet, die z.B. mit Gold oder einem anderen leitfähigen Material beschichtet ist. Dieses leitfähige Auflageelement 23 ist leitfähig mit einer Masse verbunden, so dass sich auf den gelagerten Messelementen 10 keine elektrostatische Aufladungen bilden können.

Ferner weist die dargestellte Ausführungsform Positioniermittel 24 auf. Die Positioniermittel 24 sind hier als drei kegelstumpfförmige Erhebungen ausgebildet, wobei der Umfang der Erhebungen von oben nach unten zunimmt. Die drei Positioniermittel 24 sind untereinander im Winkel von 120 Grad um die Ausnehmungen der Halterung 21 angeordnet. Wird ein im Wesentlichen scheibenförmiges Messelement 10 in eine der Halterungen 21 etwas schief eingelegt, so rutscht das Messelement 10 entlang der Mantelfläche der Positioniermittel 24 in die richtige Position in der Halterung 21. Somit ist die Anordnung der drei Kegelstümpfe 23 um die Halterung 21 herum eine Zentrierungseinrichtung für die Messelemente 10.

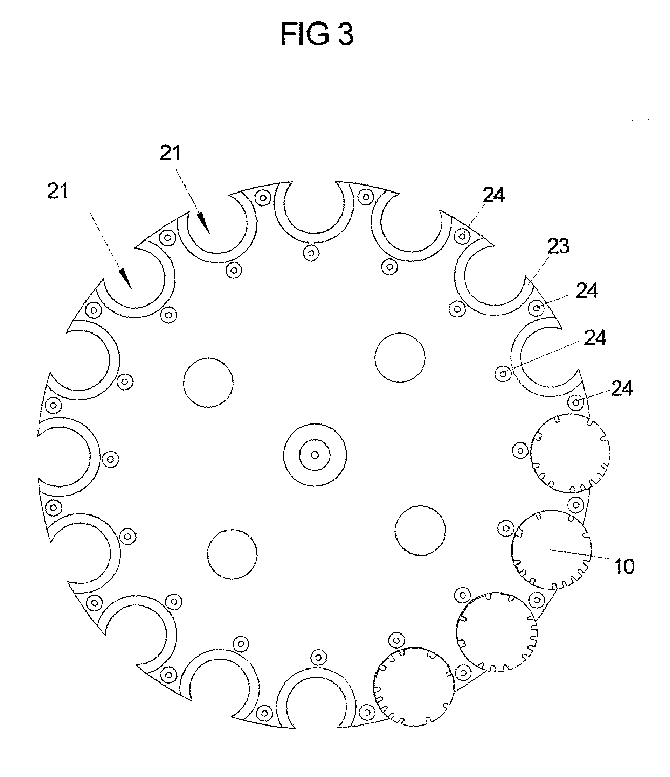

Die regelmäßige Anordnung der Positioniermittel 24 um die Halterung 21 und die Anordnung des Auflageelementes 23 sind gut in der Fig. 3 erkennbar, in der eine Draufsicht auf eine Ebene der Lagerungsvorrichtung 20 dargestellt ist.

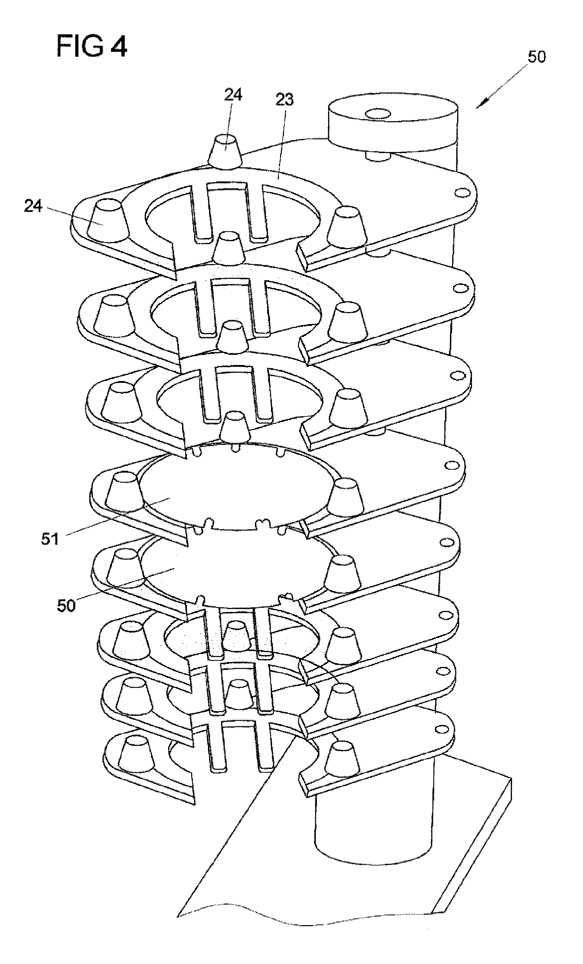

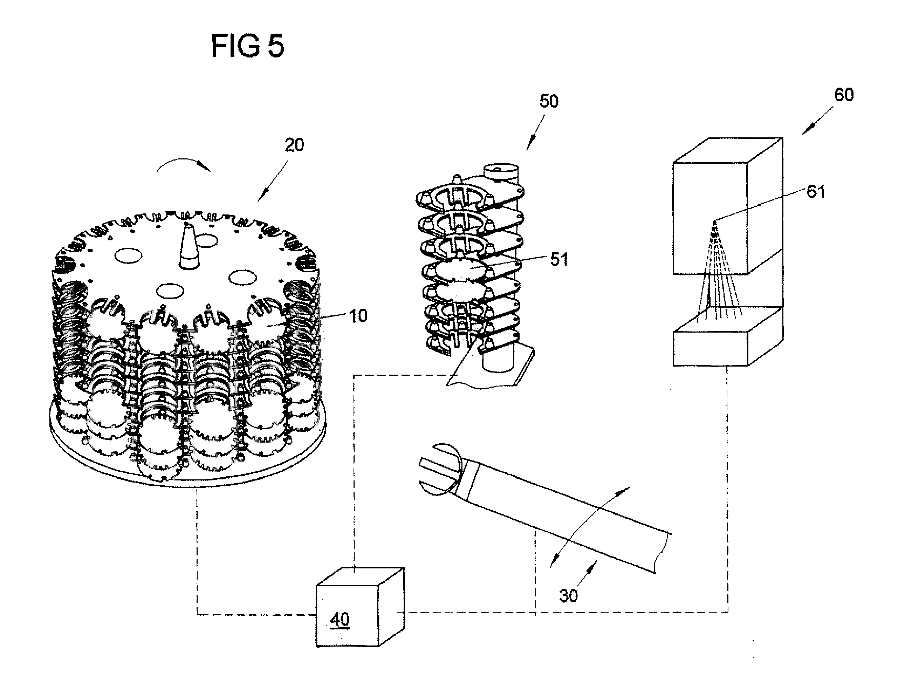

In Fig. 4 ist ein Referenzmittel 50 dargestellt, dessen Funktion im Rahmen der Fig. 5 noch näher beschrieben wird. In diesem Referenzmittel 50 sind einige Referenzmesselemente 51 angeordnet, die grundsätzlich ähnlich zu den anderen Messelementen 10 sind. Aus diesem Grund sind auch die Halterungen und Lagerungen in dem Referenzmittel 50 ähnlich zu den Lagerungen, die in Zusammenhang mit den Fig. 2 und 3 beschrieben wurden. Wie in der Lagerungsvorrichtung 20, verfügt auch das Referenzmittel 50 über Halterungen mit Positioniermitteln 24, die kegelstumpfförmig ausgebildet sind.

In Fig. 5 ist der Gesamtzusammenhang der einzelnen Komponenten dargestellt, wobei eine Steuerungsvorrichtung 40 (z.B. ein PC oder ein Mikrocomputer) die Komponenten wenigstens teilweise steuert.

Die die als Revolverturm ausgebildete Lagerungsvorrichtung 20 war bereits ausführlich beschrieben worden. Ein Handhabungsmittel 30, das z. B. ein Roboter sein kann oder an einem Roboter angeordnet sein kann, dient dazu, einzelne Messelemente 10 aus der Lagerungsvorrichtung 20 zu entnehmen oder sie wieder in der Lagerungsvorrichtung 20 abzulegen. Das Handhabungsmittel kann z. B. diverse diskrete vertikale Positionen einnehmen, um die einzelnen Ebenen 22A, 22B der Lagerungsvorrichtung 20 zu erreichen. In der Horizontalen können diskrete Winkelpositionen eingenommen werden.

Vor einer Messung wird jedem der Messelemente 10 eine Identifikationsnummer zugeordnet, die mit einer entsprechenden Kodiervorrichtung, z. B. einer Stanze für die Ausnehmungen, als Kodierung 1, 1A aufgebracht wird. Alternativ kann auch ein Lasersystem zum Ausbrennen der Ausnehmungen verwendet werden. Vor der Messung erfolgt auch eine Wiegung der Messelemente 10, wobei die individuellen Messergebnisse gespeichert werden. Auch können Filtertypen, das Datum und/oder Ort gespeichert werden und/oder auf auf dem Messelement 10 kodiert werden. Mit diesen Daten kann sichergestellt werden, dass die Messelemente 10 auch dann sicher zugeordnet werden können, sollten sie einmal durcheinander geraten sein.

Wurde z. B. eine Kassette mit der Lagerungsvorrichtung 20 für Messungen im Außenraum eingesetzt, so werden die einzelnen Messelemente 10 nach Beendigung der Messungen ausgewertet. Unmittelbar vor der Messung könnte der Messbeginn und andere Betriebsdaten (z.B. Luftdurchsatz) auf den Messelementen 10 kodiert werden. Für eine solche Ausgestaltung müsste eine Kodiervorrichtung z.B. im Staubsammelgerät angeordnet sein. Für die Handhabung der Lagerungsvorrichtung 20, oder auch Teile davon kann es sinnvoll sein, Transponder zu Identifikation zu verwenden.

Wenn die Messelemente 10 im Außenraum verwendet worden sind, werden sie einer Auswertung zugeführt.

Zu Beginn der Auswertung können die Referenzmesselemente 51 durch das Handhabungsmittel 30 aus dem Referenzmittel 50 entnommen und einer Messvorrichtung 60 zugeführt werden. Im vorliegenden Beispiel ist dies eine Waage, mit der z.B. mit Partikeln beladene Messelemente 10 ausgewertet werden sollen. Die Waage ist auf einem separaten Gestell mit einem Granitblock angeordnet (hier nicht dargestellt). Auch weist die Waage zusätzliche Dämpfungselemente auf, um eine Entkopplung von eventuellen Störungen zu ermöglichen.

Die Referenzmesselemente 51 sind mit Staub unbelastet und können dazu verwendet werden, um die Funktionsfähigkeit der Messvorrichtung 60 zu prüfen. Die Messvorrichtung 60 verfügt auch über ein Lesemittel 61 für die Kodierungen 1, 1A, die an den Messelementen 10 und Referenzmesselementen 51 angeordnet sind. Das Lesemittel 61 ist an die Art der Kodierungen 1, 1A angepasst. Wenn die Kodierungen 1, 1A durch Ausnehmungen gebildet sind (siehe Fig. 1), so könnte das Lesemittel 61 einen Laser und eine Fotozelle aufweisen, um die Kodierung 1, 1A des Messelementes 10 auszulesen. Alternativ können auch andere Lichtquellen verwendet werden. Wenn andere Formen der Kodierungen 1, 1A, wie z.B. eine lokale Verdünnung des Materials der Messelemente 10 vorhanden ist, kann grundsätzlich auch eine Lichtquelle und eine Fotozelle oder eine Kamera zum Auswerten verwendet werden, da Zonen unterschiedlicher Materialdicke das Licht unterschiedlich durchlässt.

Wenn die Referenzmessungen erfolgreich abgeschlossen sind, können die einzelnen Messelemente 10 der Lagerungsvorrichtung 20 mit dem Handhabungsmittel 30 entnommen und dem Messmittel 60 zugeführt werden. Dies kann automatisch für alle Messelemente 10 in einer vorbestimmten Weise erfolgen. Durch die Individualisierung der Messelemente 10 mittels der Kodierungen 1, 1A ist es möglich die Messelemente 10 ohne eine bestimmte Ordnung der Lagerungsvorrichtung zu entnehmen, die Messungen durchzuführen und die Messergebnisse genau einem Messelement 10 zuzuordnen.

Die Messergebnisse werden zentral und/oder dezentral von der Steuerungsvorrichtung 40 aufgezeichnet und/oder weitergeleitet. Bei der Wägung erkennt das Lesemittel 61 die Kodierung 1, 1A. Die Steuerungsvorrichtung 40 kennt das jeweilige Leergewicht des Messelementes 10, dass das Gewicht des auf dem Messelement 10 vorhandenen Staubes sehr genau gemessen werden kann.

Eine solche Anordnung der Komponenten kann in einer klimatisierten oder auch hermetisch abgeschirmten Umgebung automatisch erfolgen, so dass aufwändig manuelle und fehlerträchtige Handhabungen entfallen.

Im Folgenden werden Ausführungsformen einer Vorrichtung beschrieben, mit der in effzienter Weise Messelemente 10 hergestellt werden können.

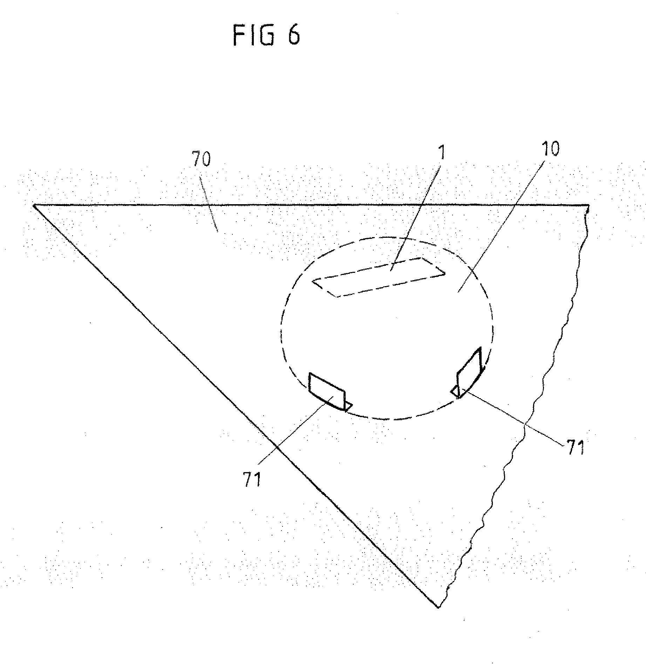

In Fig. 6 ist ein Teil einer Trägervorrichtung 70 dargestellt, die z.B. aus einem biegsamen Material wie Papier oder Kunststoffbestehen kann. In die Trägervorrichtung 71 werden Haltermittel 71 für Messelemente 10 eingebracht. In der dargestellten Ausführungsform sind zwei Laschen 71 aus der Trägervorrichtung ausgestanzt, so dass diese etwas hochgebogen werden können. In die sich bildende Tasche kann dann ein Rohling für ein Messelement 10 (in Fig. 6 gestrichelt dargestellt), z.B. eine Filterpapierscheibe eingelegt werden. Durch die Laschen 71 wird der Rohling in der Ebene der Trägervorrichtung 70 gegen ein Verrutschen gesichert. Alternativ kann auch nur eine Lasche oder mehr als zwei Laschen als Haltemittel 71 verwendet werden. Auch ist es möglich, dass Haltemittel 71 als einen geraden oder gebogenen Schlitz auszubilden, in den der Rohling eingeführt werden kann. Die Größe der Haltemittel 71 hängt von der Größe, z.B. dem Durchmesser des Messelements 10 ab. Bei nichtkreisförmigen Formen der Messelemente 10 ist die Anordnugn der Haltemittel 71 entsprechend angepasst.

Die Trägervorrichtung 70 kann dazu dienen, eine Vielzahl von Haltemitteln 71 aufzunehmen, in die gleichzeitgig eine Vielzahl von Rohlingen für Messelemente 10 gehalten werden können. Diese können dann zusammen bearbeitet werden. So können eine solche Trägervorrichtung 70 zusammen mit den Rohlingen in einer einfachen Weise in einem Drucker mit einem Aufdrucken versehen werden. So können z.B. individualisierende Kodierungen 1 auf die Rohlinge der Messelemente 10 aufgebracht werden (in Fig. 6 gestrichelt dargestellt).

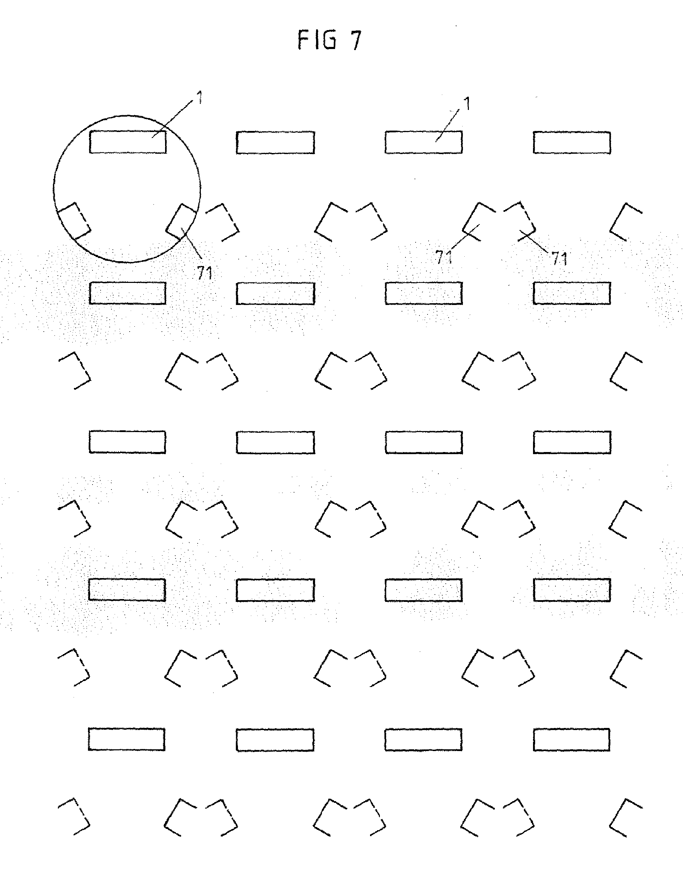

In Fig. 7 ist schematisch eine DIN-A-4 Seite dargestellt, auf der 20 Haltemittel 71 in einem Raster angeordnet. Oben links ist ein Rohling für ein Messelement 10 dagestellt, dass in die Laschen 71 eingeschoben ist.

In einer weiteren Ausführungsform wird die Anordnung gemäß Fig. 7 weiter entwickelt, indem eine Hälfte eines querformatigen DIN-A-3 Bogens (80 g/cm²) als Trägervorrichtung mit einem Raster entsprechend der Fig. 7 versehen wird. Die gegenüberliegende Seite des DIN-A-3 Bogens wird dann über das Raster gefaltet, so dass die eingelegten Rohling für die Messelemente durch die darübergefaltete Seite fixiert sind. In der darübergefalteten Seite sind Fenster an den Positionen eingebracht, in der der Aufdruck für die Kodierung 1 erfolgen soll. Die Fenster können z.B. durch Messer, Laser oder ähnliches mit hoher Präzision in die Trägervorrichtung eingearbeitet werden. Der zusammengefaltete Bogen kann dann z.B. in einem einem Tintenstrahldrucker bedruckt werden.

Die Erfindung beschränkt sich in ihrer Ausführung nicht auf die vorstehend angegebenen bevorzugten Ausführungsbeispiele. Vielmehr ist eine Anzahl von Varianten denkbar, die von den erfindungsgemäßen Lösungen auch bei grundsätzlich anders gearteten Ausführungen Gebrauch machen.

### Bezugszeichenliste

- 1: Kodierung
- 1A: Startkodierung
- 2: Messzone
- 10: Messelement
- 20: Lagerungsvorrichtung
- 21: Halterung
- 22: Ebene
- 23: Auflageelement
- 24: Positioniermittel
- 25: Griffelement
- 30: Handhabungsmittel
- 40: Steuerungsvorrichtung
- 50: Referenzmittel
- 51: Referenzmesselement
- 60: Messmittel
- 61: Lesemittel
- 70: Trägervorrichtung
- 71: Haltemittel (Lasche)

## Patentansprüche

1. Messelement (10) mit mindestens einer für ein Fluid permeablen Messzone (2) und mit mindestens einer Kodierung (1) auf und/oder in einem Material des Messelements (10), insbesondere zur Individualisierung des Messelementes (10), wobei die Kodierung (1) durch Abtragen des Materials, durch Auftragen auf das Material, durch einen Ausschnitt des Materials, durch eine Strukturierung des Materials, durch eine Verdünnung des Materials und/oder durch Prägen des Materials gebildet ist.

2. Messelement nach Anspruch 1, **dadurch gekennzeichnet, dass** die mindestens eine Kodierung (1) außerhalb der Messzone (11) angeordnet ist.

3. Messelement nach Anspruch 1 oder 2, **dadurch gekennzeichnet, dass** es als Filterelement für die Filterung von Partikeln aus Gasen oder Gasgemischen ausgebildet ist.

4. Messelement nach mindestens einem der vorhergehenden Ansprüche, **dadurch gekennzeichnet, dass** die mindestens eine Messzone (2) einen Indikator für eine chemische Substanz aufweist.

5. Messelement nach mindestens einem der vorhergehenden Ansprüche, **gekennzeichnet durch** eine runde Außenkontur, eine trapezförmige Außenkontur oder eine polygonale Außenkontur, wobei die mindestens eine Kodierung (1) in einem Randbereich der Außenkontur angeordnet ist.

6. Messelement nach mindestens einem der vorhergehenden Ansprüche, **dadurch gekennzeichnet, dass** die mindestens eine Kodierung (1) in Form eines binären Codes ausgebildet ist, die mindestens eine Kodierung (1) mindestens eine Ausnehmung an der Außenkontur aufweist und / oder die mindestens eine Kodierung (1) ein Mittel zur Identifikation der räumlichen Lage des Messelements (10) in einer Lagerungsvorrichtung (20) aufweist.

7. Vorrichtung zur Herstellung mindestens eines Messelementes,
**gekennzeichnet durch**
eine Trägervorrichtung (70) mit mindestens einem Haltemittel (71) für die Aufnahme und Fixierung eines Rohlings für mindestens ein Messelement (10) nach einem der Ansprüche 1 bis 6., wobei insbesondere das mindestens eine Haltemittel (71) eine Lasche und / oder einen Schlitz aufweist, die in die Trägervorrichtung (70) eingebracht sind.

8. Vorrichtung nach Anspruch 7, **dadurch gekennzeichnet, dass** die Trägervorrichtung (70) flexibel ausgebildet ist und ein Teil der Trägervorrichtung (70) so gefaltet werden kann, dass er den Rohling für das mindestens eine Messelement (10) als zusätzliche Fixierung bedeckt.

9. Lagerungsvorrichtung für mindestens ein Messelement nach einem der Ansprüche 1 bis 6,
**gekennzeichnet durch**
eine drehbare Halterung (21) für das mindestens eine Messelement (10).

10. Lagerungsvorrichtung nach Anspruch 9, **gekennzeichnet durch** mindestens zwei Halterungen (21) für das mindestens eine Messelement (10), wobei die mindestens zwei Halterungen (21) in parallelen Ebenen (22a, 22b) angeordnet sind, wobei insbesondere mindestens eine der Halterungen (21) separat von den anderen Halterungen (21) von der Lagerungsvorrichtung entnehmbar ist.

11. Lagerungsvorrichtung nach mindestens einem der Ansprüche 9 bis 10, **gekennzeichnet durch** eine Kopplung mit einer Handhabungsvorrichtung (30), insbesondere einem Roboter, für das mindestens eine Messelement (10) und / oder eine Kopplung mit einer Steuerungsvorrichtung (40) zur Zuordnung der räumlichen Lage des mindestens einen Messelement (10) in der Lagerungsvorrichtung (20), insbesondere der Winkellage des mindestens einen Messelements (10) oder der Lage des mindestens einen Messelements (10) in einer Ebene (22a, 22b).

12. Lagerungsvorrichtung nach einem der Ansprüche 9 bis 13, **dadurch gekennzeichnet, dass** die Halterungen (21) für das mindestens eine Messelement (10) eine leitfähige Auflagefläche (23), insbesondere aus einem nichtoxiderbaren Material aufweisen, wobei die Halterung (21) und/oder die leitfähige Auflagefläche (23) insbesondere elektrisch leitend mit einer Masse verbunden ist.

13. Lagerungsvorrichtung nach einem der Ansprüche 9 bis 12, **gekennzeichnet durch** mindestens ein Positioniermittel (24) und/oder Fixiermittel für das mindestens eine Messelement (10) in der Halterung (21).

14. Lagerungsvorrichtung nach einem der Ansprüche 9 bis 13, **gekennzeichnet durch** ein Lesemittel (61) für die mindestens eine Kodierung (1) des mindestens einen Messelementes (10).

15. Kodiervorrichtung für die Aufbringung mindestens einer Kodierung (1) auf ein Messelement (10) nach einem der Ansprüche 1 bis 6, insbesondere mit einem Mittel zur Einbringung von Ausnehmungen in die Außenkontur des Messelementes (10).
